# EUROPÄISCHE PATENTSCHRIFT

(11) **EP 1 701 803 B1**
(45) Veröffentlichungstag und Bekanntmachung des Hinweises auf die Patenterteilung: **26.05.2010**
(21) Anmeldenummer: 04741093.1
(22) Anmeldetag: 16.07.2004
(51) Int. Cl.: B05C 5/02

(54) **VERFAHREN ZUM AUTOMATISCHEN AUFBRINGEN UND ÜBERWACHEN EINER AUF EINEM SUBSTRAT AUFZUBRINGENDEN STRUKTUR SOWIE EINE VORRICHTUNG HIERFÜR**
METHOD FOR AUTOMATICALLY APPLYING AND CONTROLLING A STRUCTURE APPLICABLE ON A SUBSTRATE AND DEVICE FOR CARRYING OUT SAID METHOD
PROCEDE D'APPLICATION ET DE CONTROLE AUTOMATIQUES D'UNE STRUCTURE A APPLIQUER SUR UN SUBSTRAT ET DISPOSITIF DESTINE A CET EFFET

(30) Priorität: 23.12.2003 DE 10361018
(43) Veröffentlichungstag der Anmeldung: 20.09.2006
(73) Patentinhaber: QUISS GMBH, 82178 Puchheim (DE)
(72) Erfinder: TOMTSCHKO, Andreas, 74189 Weinsberg (DE); BERGER, Mirko, 80339 München (DE); LINNEKOHL, Jan, 64625 Bensheim (DE); RAAB, Roman, 81827 München (DE)
(74) Vertreter: Ascherl, Andreas
(86) Internationale Anmeldenummer: PCT/EP2004/007964
(87) Internationale Veröffentlichungsnummer: WO 2005/065844

(56) Entgegenhaltungen:
- DE-A- 10 048 749
- US-A- 4 724 302
- US-A- 5 402 351
- US-B2- 6 541 757

## Beschreibung

Die vorliegende Erfindung betrifft ein Verfahren zum automatischen Aufbringen und Obenwachen einer auf einem Substrat aufzubringenden Struktur sowie eine entsprechende Vorrichtung hierfür.

Herkömmlicherweise werden bislang zum Erkennen einer auf einem Substrat aufzubringenden Struktur optische Vermessungen durchgeführt, wobei häufig verschiedene Systeme zur voflautometischen Prüfung der Struktur, u.a. Klebstoff und Dichtmittelraupen, verwendet werden. Hierzu werden mehrere Videckameras auf die zu erkennende Struktur gerichtet, wobei zusätzlich ein Beleuchtungsmodul erforderlich ist, das zur Erzeugung eines kontrastreichen Kamerabildes dient

Um eine Kleberraupe bzw. Kleberspur beim Auftragen überwachen zu können, ist es enforderlich, dass eine Referenzkleberspur eingelemt wird, d.h. von der Kamera bzw. den Kameras abgefahren wird, um daraus entsprechende Parameter zu berechnen, nach denen die aufgebrachten Kleberspuren daraufhin bewertet werden.

Jedoch werden einzelne Bauteile nicht stets In der gleichen Position mittels der Fördertechnik zu der Auftragseinrichtung bzw. zur Vorrichtung zum automatischen Aufbringen und Überwachen zugeführt. Ferner ist es bei dem Aufbringen einer Klabstoffspur auf den Felz oder eine Fügenaht erforderlich, dass die vorgegebenen Toleranzen der einzelnen Bauteile bzw. der Lage der einzelnen Fügenähte bzw. Falze korrigiert werden.

Als Stand der Technik ist die Druckschrift US 4,274,302 bekannt, welche ein Verfahren offenbart, bei dem ein Auftragsprozess in Echtzeit gesteuert wird.

Ferner ist die Druckschrift US 5,402,351 bekannt, welche eine Vorrichtung zur Herstellung von dreidimensionalen Objekten ermöglicht. Hierzu wird eine Auftragseinrichtung verwendet, welche von drei Kameras überwacht wird. Die Kameras sind hierzu an der Auftragseinrichtung angeordnet und bilden einen Sensor, welcher ein Feedbacksignal zu einer Steuereinrichtung übermittelt.

Darüber hinaus besteht Bedarf nach einem Verfahren zum automatischen Aufbringen und Oberwachen einer auf einem Substrat aufzubringenden Struktur, vorzugsweise eine Kleberraupe oder Klebstoffapur, wobei die Auftragsstruktur bzw. Klebstoffspur mit hoher Genaulgkeit während des Auftragens überwacht wird.

Somit ist es Aufgabe der vorliegenden Erfindung, ein Verfahren zum automatischen Aufbringen und Überwachen einer auf einem Substrat aufzubringenden Struktur bereit zu stellen, wobei die Auftragsstruktur bzw. Kleberspur mit hoher Genauigkeit während des Auftragens überwacht wird, und wobei eine automatische Führung der Auftragseinrichtung bzw. eine Positionskorrektur In bezug auf Lagetoleranzen der einzelnen Bauteile bzw. der Toleranzen von Fugenähten oder ähnlichem ermöglicht wird.

Ferner ist es Aufgabe der vorliegenden Erfindung eine geeignete Vorrichtung zur Durchführung des erfindungsgemäßen Verfahrens bereit zu stellen.

Diese Aufgaben werden verfahrenstechnisch mit den Merkmalen von Anspruch 1 sowie vorrichtungstechnisch mit den Merkmalen von Anspruch 15 gelöst

Gemäß der Erfindung wird ein Verfahren zum automatischen Aufbringen und Überwachen einer Klebstoffspur auf ein Substrat bzw. Bauteil, insbesondere einen Falz oder einer Fügenaht, vorgeschlagen, wobei eine Referenzkante bzw. Referenznaht von einer ersten Kamera in Vorlaufrichtung der Auftragseinrichtung ermittelt wird, um die Auftragseinrichtung gemäß der Referenzkante bezüglich der aufgenommenen Bildern der ersten Kamera zu steuern bzw. zu regeln. Gleichzeitig bzw. unmittelbar nach dem Aufbringen der Klebstoffspur auf das Substrat bzw. den Falz oder Stoß der Bauteile wird eine Online-Überwachung der aufgebrachten Klebstoffspur in Nachlaufrichtung von einer zweiten Kamera vorgenommen, d.h. die Klebstoffspur wird auf das Substrat aufgebracht und daraufhin überprüft die zweite Kamera die Qualität der soeben aufgebrachten Klebstoffspur. Erfindungsgemäß ermöglicht dies gleichzeitig eine Nahtführung für zwei zu verklebenden Bauteile sowie eine Online-Überwachung des Klebstoffauftrags bzw. Dichtmittelauftrags. Somit wird eine Reduzierung des aufgebrachten Dichtmittels erreicht, da aufgrund der Nahtführung und gleichzeitigen Kontrolle lediglich ein geringer Materialaufwand aufgrund des Toleranzausgleichs erforderlich ist.

Weitere vorteilhafte Ausgestaltungen ergeben sich aus den Unteransprüchen. So ist es für eine dreidimensionale Positionskorrektur in bezug auf Lagetoleranzen der einzelnen Bauteile bzw. Toleranzen von Fügenähten vorteilhaft, wenn die Referenzkontur bzw. ein Merkmal von zumindest zwei Kameras ermittelt wird, um eine dreidimensionale Positionskorrektur für die Auftragseinrichtung mit Hilfe des Stereometrieverfahrens durchzuführen.

Ferner ist es von Vorteil, wenn die beiden Kameras das Substrat, einen Bauteilabschnitt oder ein oder mehrere Bauteile als Vollbild oder Großbild aufnehmen, wobei die Vollbilder oder Großbilder der beiden Kameras einen Überlappungsbereich in Vorlaufrichtung aufweisen, und wobei die sich im Überlappungsbereich ergebende dreidimensionale Lageerkennung der Referenzkontur zur Grobjustierung der Auftragseinrichtung vor dem Aufbringen der Struktur verwendet wird. Dabei wird der Auftragseinrichtung bzw. dem Roboter entsprechende Korrekturwerte übermittelt um dessen Koordinatensystem für den Klebstoffauftrag zu verschieben.

Wenn eine Projektion zur dreidimensionalen Auswertung auf den Bereich der Referenzkontur aufgebracht wird, insbesondere wenn eine oder mehrere Laserlinien als Projektion auf das Substrat aufgebracht werden, dann kann eine dreidimensionale Profilauswertung hinsichtlich der Höhe und der Kontur von beliebigen Bauteilen ermöglicht werden, auch wenn diese für eine übliche Bildbearbeitung ohne zusätzliche Projektion nicht auswertbar ist.

Darüber hinaus ist es besonders vorteilhaft, wenn die Referenzkontur von nur einer ersten Kamera in Vorlaufrichtung zur Regelung des Verlaufs der aufzubringenden Struktur gemäß der Referenzkontur ermittelt wird, und wobei von der ersten Kamera lediglich ein Streifen des Bildes zur Online-Regelung des Auftragens der Kleberstruktur aufgenommen wird. Durch diesen Partial-Scan bzw. ein teilweises Auslesen des Bildaufnahmechips müssen nur geringe Datenströme verarbeitet werden, so dass die Bildaufnahmefrequenz um ein vielfaches erhöht werden kann. Dabei erfolgen die Bildaufnahmen in definierten festen Zeitabständen und sind unabhängig von der Geschwindigkeit der Auftragseinrichtung bzw. der Robotergeschwindigkeit.

Wenn von der zweiten Kamera lediglich ein Streifen des Bildes zur Online-Überwachung der aufgebrachten Struktur verwendet wird, kann sowohl der Klebstoffauftrag mit hoher Geschwindigkeit als auch die Nahtführung mit hoher Geschwindigkeit Online erfolgen, da beide Kameras eine hochfrequente Bildaufnahme und eine schnelle Auswertung mit nur einem Sensor mit zwei Kameras ermöglichen. Dabei wird parallel zur Online-Inspektion der aufgetragenen Dichtmittelspur im Vorlauf eine Referenzkante ermittelt und die Differenzwerte dem Roboter zur Korrektur der Bahn weitergeleitet, so dass die Genauigkeit des Dichtmittelauftrags wesentlich erhöht werden kann und eine Materialreduzierung erzielt wird. Durch dieses nur teilweise Auslesen des Bildaufnahmechips der einzelnen Kameras können synchron und parallel von allen Kameras gleichzeitig bei hoher Bildaufnahmerate Bilder erfasst werden.

Gemäß einer vorteilhaften Ausführungsform, werden die Streifen der Bilder der Kameras unter Bildung einer einzigen Bildsequenz aufgenommen und wobei die Bildaufnahmefrequenz entsprechend der Datenverminderung durch die Aufnahme von lediglich einem Streifen des Bildes erhöht wird, um die Geschwindigkeit der automatischen Aufbringung und Überwachung des Dichtmittelauftrags zu erhöhen. Durch die Speicherung einer einzigen Bildsequenz für alle Kameras können die jeweiligen Bilder der einzelnen Kameras ortsabhängig gemäss dem Verfahren der Auftragseinrichtung entsprechend zugeordnet werden.

Wenn jede Kamera nur einen Teil, insbesondere in etwa ein Drittel, Viertel oder Fünftel, der Bildzeilen als Streifen des Bildes verwendet, wird die Bildaufnahmefrequenz entsprechend vervielfacht, insbesondere im wesentlichen verdreifacht, vervierfacht oder verfünffacht .

Ferner ist es von Vorteil, wenn eine Parametrierung und eine Aufnahme der Auftragsbahn in einem einzigen Bildaufnahmelauf erfolgt, wobei die Bilder aller Kameras in einer Bildsequenz gespeichert werden.

Die gespeicherte Bildsequenz verwendet erfindungsgemäß für die Parametrierung den Roboterverfahrweg und/oder die Roboterverfahrzeit oder die Roboterkoordinaten, die Position, den Kontrast, den Grauwert oder Farbwert, die Breite und Güte der aufgetragenen Struktur.

Durch die geringen zu verrechnenden Daten können aufgrund der hohen Bildaufnahmefrequenz vergleichsweise kurze Teilabschnitte des Dichtmittelauftrags und auch der Referenzkontur bzw. Fügenaht aufgenommen werden, die beispielsweise zwischen 1 mm und 3 mm liegen. Des weiteren ist es von Vorteil, wenn die aufzubringende Struktur durch die Parametrierung im wesentlichen in einer Vektorkette abgelegt wird, wobei eine hohe Bildaufnahmefrequenz und kurze Teilabschnitte von im wesentlichen zwischen 0,5 mm und 4 mm, insbesondere 1 und 3 mm vorgenommen werden. Die Vektorisierung hat den Vorteil, dass die Klebstoffspur in Form einer Vektorkette in eine kameraübergreifenden, globalen Koordinatensystem abgelegt werden kann. Im Gegensatz dazu, wird herkömmlicherweise lediglich ein lokales kamerabildbezogenes Koordinatensystem bisher verwendet. Erfindungsgemäß ist es dadurch möglich, dass nach einem Tausch des Sensorkopfs lediglich eine Rekalibrierung bzw. Neukalibrierung erfolgen muss, ohne dass die Klebstoffspur neu eingelernt werden muss.

Gemäß einer weiteren Ausführungsform ist es vorteilhaft, wenn drei Kameras verwendet werden, wobei jede Kamera sowohl für die Regelung in Vorlaufrichtung gemäß der Referenzkontur als auch für die Überwachung der aufgetragenen Struktur in Nachlaufichtung verwendet wird, bzw. verwendet werden kann, wobei die drei Kameras jeweils einen Überlappungsbereich zur benachbarten Kamera auf einer Kreisbahn aufweisen. Als Folge davon, kann ein Sensor mit drei Kameras fest an der Auftragseinrichtung angebracht werden, da jede einzelne Kamera sowohl die Regelung der Nahtführung als auch die Online-Überwachung des Dichtmittelauftrags übernehmen kann. Vorteilhafterweise bilden die Winkelwerte der Kreisbahn von 0 bis 360° ein globales Koordinatensystem, wobei den Bildern der einzelnen Kameras ein Segment der Kreisbahn zugeordnet wird, um auf dieser Kreisbahn entweder die Nahtführung oder die Dichtmittelüberwachung durchzuführen. Folglich sind dabei von den drei Kameras jeweils zwei für die Auswertung aktiv, nämlich eine für die Nahtführung und eine andere für die Überwachung des Dichtmittelauftrags.

Ein weiterer Vorteil besteht darin, dass bei dem Verlauf der Referenzkontur oder der Kleberspur von einer Kamera zur nächsten Kamera automatisch umgeschaltet wird, d.h., dass die Aktivierung von der einen Kamera auf die andere Kamera übergeben wird, wenn der Verlauf der Auftragsstruktur oder der Referenzkontur von dem Segment der Kreisbahn einer Kamera über den Überlappungsbereich in das Segment der Kreisbahn einer anderen Kamera überwechselt.

Dadurch dass die Bildaufnahmen sehr kurz hintereinander stehen (jeweils alle 0,5 bis 4, insbesondere 1 bis 3 mm), kann man davon ausgehen, dass sich die Lage der Klebstoffspur bzw. der Fügekante nicht zu stark ändern kann, was den Informationsgehalt bzw. die Zuverlässigkeit des A-Priori-Wissens deutlich erhöht, so dass vorauszusehen ist, wo die Spur liegen wird. Ein positiver Effekt davon ist, dass auch ohne Expertenwissen eines Menschen der Rechner vollautomatisch die Lage der Spur erkennen kann, da diesem bereits bekannt ist, wo die Spur im nächsten Bild ungefähr verlaufen wird. Dadurch kann der Suchbereich eingeschränkt und die Auswertegeschwindigkeit erhöht werden.

Erfindungsgemäß ist eine Vorrichtung zum automatischen Aufbringen und Überwachen einer auf einem Substrat aufzubringenden Struktur, vorzugsweise Kleberraupe oder Kleberspur, zur Durchführung des erfindungsgemäßen Verfahrens vorgesehen, wobei zumindest ein Beleuchtungsmodul und eine Sensoreinheit vorgesehen ist, und wobei die Sensoreinheit aus zumindest zwei Kameras aufgebaut ist, welche um eine Auftragseinrichtung zum Auftragen der auf dem Substrat aufzubringenden Struktur vorgesehen sind und an dieser derart angeordnet sind, dass zumindest eine Kamera in Vorlaufrichtung zur Regelung der Auftragseinrichtung mittels einer Referenzkontur und zumindest eine Kamera in Nachlaufrichtung zur gleichzeitigen Online-Überwachung der auf dem Substrat aufgebrachten Struktur vorgesehen ist. Mit Hilfe der erfindungsgemäßen Vorrichtung kann somit beispielsweise eine Nahtführung als Referenzkontur für die Steuerung der Auftragseinrichtung bzw. Roboterführung und gleichzeitig eine Online-Kontrolle des Dichtmittelauftrags vorgenommen werden, so dass es aufgrund der Nahtführung zu einer Materialreduzierung des Dichtmittelauftrags kommt, da die Breite der Klebstoffspur aufgrund der Führung der Auftragseinrichtung verringert werden kann.

Wenn sich die optischen Achsen der einzelnen Kameras in Blickrichtung im wesentlichen mit der axialen Längsachse der Auftragseinrichtung schneidet oder die optischen Achsen der einzelnen Kameras parallel zueinander ausgerichtet sind, und insbesondere senkrecht auf das Substrat ausgerichtet sind, so ist es gemäß einer derartigen Weiterbildung vorteilhaft, dass ein enger Bereich um die Auftragseinrichtung mit geeigneter Auflösung und hoher Bildaufnahmefrequenz überwacht werden kann.

Gemäß einer bevorzugten Ausführungsform sind einzelne Kameras, insbesondere 3 Kameras, in Umfangsrichtung in jeweils gleichem Abstand voneinander angeordnet.

Vorteilhafterweise werden die einzelnen Kameras derart zusammenwirken, dass die Bilder der Kameras in einer Bildsequenz gespeichert werden, wobei diese Bilder softwareseitig aus den drei synchron aufgenommenen und parallel eingezogenen Teilabschnitten der einzelnen Kameras zusammengesetzt sind.

Wenn eine Projektionseinrichtung an der Auftragseinrichtung vorgesehen ist, welche einen oder mehrere Merkmale, insbesondere Streifen, auf das Substrat für die dreidimensionale Auswertung projiziert, dann können beliebige Bauteile für eine Korrektur bzw. Justierung der Auftragseinrichtung vor dem Aufbringen der Struktur verwendet werden.

Gemäß einer bevorzugten Ausführungsform sendet die Projektionseinrichtung eine oder mehrere Laserlinien zur dreidimensionalen Profilauswertung aus. Wenn zumindest zwei Projektionseinrichtungen rund um die Auftragseinrichtung angeordnet sind, dann wird eine lückenlose dreidimensionale Auswertung um die Auftragseinrichtung ermöglicht, wobei die Auswertung von Dichtmittelhöhe und Dichtmittelkontur sowie Lage und Breite nach dem Triangulationsprinzip mittels Bildverarbeitung vorgenommen werden kann.

Gemäß einer Ausgestaltung einer Erfindung sind die Kameras derart um die Auftragseinrichtung angeordnet, dass zumindest eine im wesentlichen kreisförmige Kantenantastung, insbesondere in Form eines Kreiscalipers gebildet wird, dessen Mittelpunkt die Auftrageinrichtung der Struktur bildet. Dabei können ein oder mehrere kreisförmige Caliper verwendet werden, die es ermöglichen, dass die Ermittlung der Kante der Kleberspur auf einer Kreisbahn stattfindet.

Gemäß einer bevorzugten Ausführungsform weisen die einzelnen Kameras einen Überlappungsbereich von jeweils 30° bis 90°, insbesondere im wesentlichen 60°, zur nächsten Kamera auf. Dieser Überlappungsbereich ermöglicht ein vollautomatisches Umschalten von benachbarten Kameras, wenn die Klebstoffspur von dem Überwachungsbereich einer Kamera in den nächsten verläuft, da die Auswahl der Kamera nicht gebunden an die Roboterposition oder eine zeitliche Komponente gebunden ist, sondern sich auf die aktuellen Inspektionsergebnisse bezieht, d.h. auf der Anordnung auf der Kreisbahn des Kreiscalipers bzw. auf dem dadurch gebildeten globalen Koordinatensystem.

Ferner ist es von Vorteil, wenn das Beleuchtungsmodul aus LEDs, insbesondere Infrarot-LEDs, UV-LEDs oder RGB-LEDs aufgebaut ist.

Darüber hinaus ist es von Vorteil, wenn zur Kalibrierung der einzelnen Kameras für die Zuordnung der Winkelzugehörigkeit eine Kalibrierscheibe mit einzelnen Formelementen verwendet wird, wobei diese Formelemente insbesondere einen Winkelabstand von im wesentlichem 10° aufweisen. Dadurch kann der Skalierungsfaktor, die Winkelzugehörigkeit und der Mittelpunkt sowie der Radius des Suchkreises für die einzelnen Kameras zugeordnet werden. Erfindungsgemäß weist die Kalibrierscheibe zumindest drei Markierungsstellen auf, die in einem Kreisbogen der Kalibrierscheibe von im wesentlichen 0°, 120° und 240° angeordnet sind, um drei Kameras zu kalibrieren.

Weitere vorteilhafte Ausgestaltungen der Erfindung sind Gegenstand der übrigen Unteransprüche.

Anhand der nachfolgenden Zeichnungen werden beispielhaft vorteilhafte Ausgestaltungen der Erfindung dargestellt.

Figur 1 zeigt eine schematische Seitenansicht einer erfindungsgemäßen Vorrichtung zum Auftragen und Überwachen einer Klebstoffspur.

Figur 2 zeigt eine perspektivische Ansicht der erfindungsgemäßen Vorrichtung von Figur 1.

Figur 3 zeigt den Verfahrweg der erfindungsgemäßen Vorrichtung zum Aufbringen und Überwachen einer Klebstoffspur.

Figur 4 zeigt einen anderen Verfahrweg der erfindungsgemäßen Vorrichtung bzgl. des Umschaltens der relevanten Kameras.

Figur 5 ist eine Darstellung eines einzigen Bildes, das aus drei Bildstreifen von drei Kameras zur Nahtführung und Online-Überwachung des Dichtmittelauftrags an einer Bauteilkante zusammengesetzt ist.

Figur 6 ist eine weitere Darstellung eines einzigen Bildes, das aus drei Bildstreifen von drei Kameras zusammengesetzt ist, wobei zwei überlappende Bauteile verklebt werden.

Figur 7 zeigt schematisch eine erfindungsgemäße Kalibriervorrichtung zum kalibrieren der einzelnen Kameras der erfindungsgemäßen Vorrichtung zum Aufbringen und Überwachen einer auf einem Substrat aufzubringenden Struktur.

Figur 8 zeigt eine Draufsicht hinsichtlich des Grundprinzips der Nahtverfolgung.

Figur 9 zeigt eine Draufsicht hinsichtlich dem Prinzip der 3D-Lageerkennung.

Figur 10 zeigt eine Draufsicht hinsichtlich der Profilauswertung.

Figur 11 stellt eine schematische Seitenansicht der erfindungsgemäßen Vorrichtung mit Projektionseinrichtung dar.

Figur 12 zeigt eine schematische Draufsicht mit einer kreisförmig aufgebrachten Projektion.

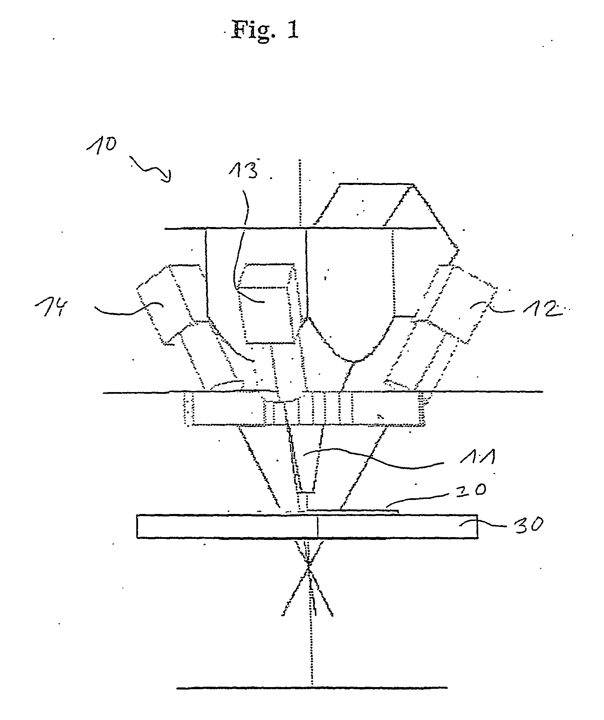

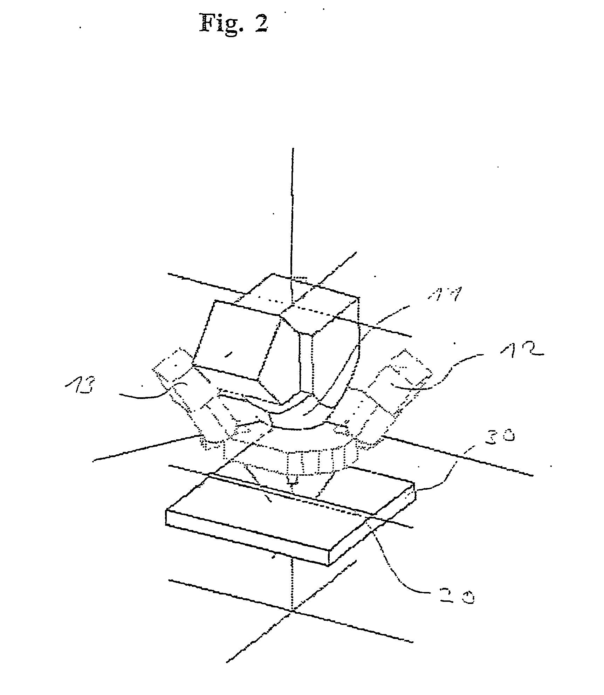

Im Weiteren wird nun der Aufbau der erfindungsgemäßen Vorrichtung zum Erkennen einer auf einem Substrat aufzubringenden Struktur gemäß den Figuren 1 und 2 erläutert.

Mit dem Bezugszeichen 10 ist die schematisch dargestellte Vorrichtung zum Aufbringen und Überwachen einer Kleberspur gezeigt. Dabei ist im Zentrum der erfindungsgemäßen Vorrichtung eine Auftragseinrichtung 11 angeordnet, durch welche eine Klebstoffspur 20 auf ein Substrat bzw. auf ein Blech 30 in der Fig. 1 von rechts nach links aufgebracht wird. Um die Auftragseinrichtung 11 sind in einem Kreis drei Kameras 12, 13, 14 in gleichmäßigem Abstand angeordnet, die auf die Auftragseinrichtung 11 jeweils ausgerichtet sind. Wie aus Figur 1 ersichtlich, schneiden sich die axialen Längsachsen der drei Kameras 12, 13, 14 mit der axialen Längsachse der Auftragseinrichtung 11 unmittelbar unterhalb des Substrats 30, sodass der Fokus der einzelnen Kameras unmittelbar um den Bereich der Auftragseinrichtung 11, insbesondere auf einer Kreisbahn, angeordnet ist.

Bei der Klebstoffinspektion wird nun entweder die Auftragseinrichtung mit den Kameras oder das Substrat verfahren, wobei gleichzeitig die Klebstoffspur 20 auf das Substrat 30 mittels der Auftragseinrichtung 11 aufgebracht wird und wobei die Kameras 12, 13, 14 die aufgebrachte Struktur überwachen. Es ist hierzu möglich, die Auftragseinrichtung mit den Kameras oder das Substrat zu verfahren, um die Klebstoffspur in einem gewünschten Verlauf auf dem Substrat 30 aufzubringen. Bei dem erfindungsgemäßen Verfahren wird nun von einer ersten Kamera in Vorlaufrichtung, in diesem Fall nach links eine Referenzkontur bzw. Referenzlinie oder Referenzkante von Kamera 14 ermittelt, um den Verlauf der aufzubringenden Struktur gemäß der Referenzkontur zu regeln, wobei die von der ersten Kamera aufgenommenen Bilder zur Führung der Auftragseinrichtung 11 für das Auftragen der Klebstoffspur verwendet werden. Simultan zum Ermitteln der Referenzkontur wird die Klebstoffspur von der Auftragseinrichtung 11 aufgebracht, wobei die Auftragseinrichtung 11 gemäß den von der ersten Kamera ermittelten Korrekturwerten auf die entsprechende Spur bzw. den entsprechenden Klebstoffspurverlauf gebracht wird. Synchron hierzu wird die Klebstoffauftragsspur in Nachlaufrichtung von einer zweiten Kamera überwacht. Dadurch können die mitfahrenden Kameras simultan mit dem Auftragen, die Klebstoffspur unabhängig von dem Verfahrweg gemäß der Referenzkontur steuern und die Qualität der Klebstoffspur online überwachen. In Fig. 2 verläuft die Klebstoffspur 20 von links nach rechts, wobei diese als durchgezogene Linie dargestellt ist. Rechts von der Auftragseinrichtung 11 ist der gewünschte Verlauf der Klebstoffspur 20 mit gestrichelter Linie angezeigt, welcher auf dem Blech bzw. Substrat als Referenzkontur aufgebracht sein kann (beispielsweise per Laser oder als Prägung).

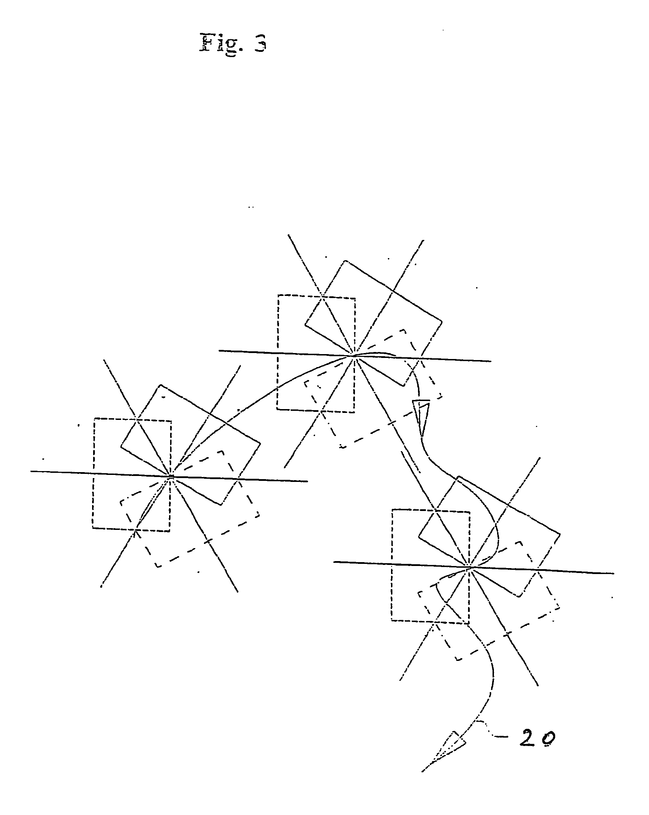

Figur 3 zeigt nun den Verlauf der Klebstoffspur 20, welcher mittels Pfeilen angezeigt wird, wobei an drei Stellen die Ausrichtung bzw. der Sichtbereich der einzelnen drei Kameras dargestellt ist. Die Sichtbereiche der einzelnen drei Kameras sind jeweils durch ein Rechteck mit durchgezogener Linie, ein Rechteck mit weit gestrichelten Linien und ein Rechteck mit eng gestrichelten Linien dargestellt. Wie aus der Figur ersichtlich bleibt die Ausrichtung der einzelnen Sichtbereiche stets konstant ausgerichtet, wobei lediglich die gesamte Vorrichtung verfahren wird.

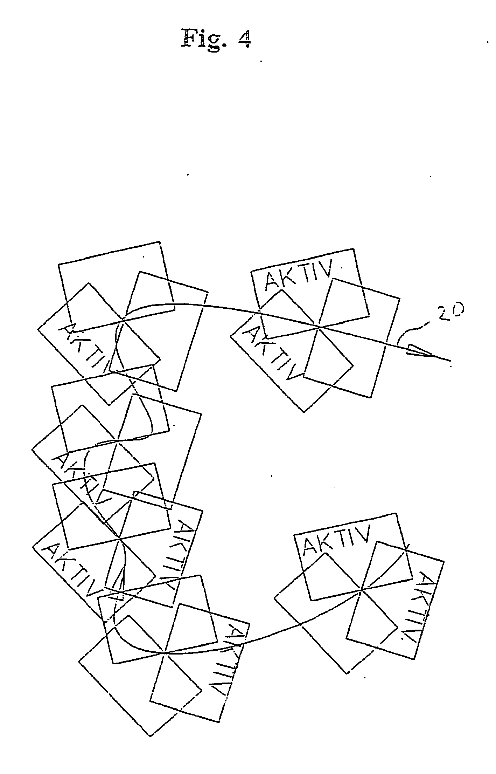

Figur 4 zeigt einen weiteren Verlauf einer Klebstoffspur 20, wobei jeweils angezeigt ist, welcher Sichtbereich aktiv ist, d.h. welche Kamera mit dem entsprechenden als Rechteck dargestellten Sichtbereich beim Abfahren der Klebstoffspur zur Qualitätskontrolle aktiv ist. Ferner ist jeweils zumindest eine zweite Kamera für die Nahtführung bzw. den Verlauf der Dichtmittelspur in Vorlaufrichtung aktiv, was jedoch aus Gründen der Übersichtlichkeit nicht dargestellt ist. Es ist jedoch ersichtlich, dass die als aktiv angezeigten Kameras in Nachlaufrichtung angeordnet sind und gemäß dem Verlauf der Klebstoffspur automatisch umgeschaltet werden. In der zur Nachlaufrichtung entgegen gesetzten Vorlaufrichtung ist daher jeweils zumindest eine Kamera für die Nahtführung und Feinjustierung der Auftragseinrichtung gemäß der vorgegebenen Referenzkontur aktiv.

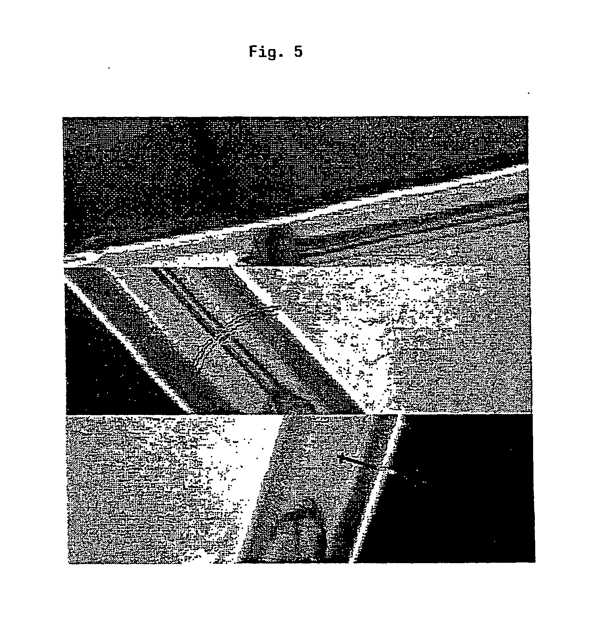

In Figur 5 sind nun drei Bildstreifen dargestellt, die jeweils einen relevanten Bildausschnitt bzw. Bildstreifen der einzelnen drei Kameras von Figur 1 darstellen. Gemäß dem erfindungsgemäßen Verfahren wird von jeder Kamera lediglich ein Streifen des Bildes aufgenommen, um für eine entsprechende Datenverminderung zu sorgen, sodass die Aufnahmefrequenz erhöht werden kann. Diese einzelnen Bildstreifen der drei Kameras werden zu einem Bild zusammengefügt, wobei die Bildaufnahmen in definierten festen Zeitabständen und unabhängig von der Robotersteuerung für die Auftragseinrichtung erfolgen. Beispielsweise nehmen die Kameras lediglich einen Steifen des Bildes auf, wobei an Stelle einer Bildhöhe von 480 Bildpunkten eine Bildhöhe von rund 100 Bildpunkten (100 Bildzeilen) verwendet wird. Durch diese Partial-Scan-Technik, d.h. ein teilweises Auslesen des Bildaufnahmechips, entstehen nur geringe Datenströme, so dass die Bildaufnahmefrequenz um das entsprechende vielfache erhöht werden kann. Durch synchrone Bildaufnahme und parallelen Bildeinzug können die drei Bildstreifen untereinander zu einem einzigen Bild zusammengefügt werden. Als Folge davon sind die drei Bilder, d.h. die drei Bildstreifen, sofort hinsichtlich des Ortes und der Zeit gemäss dem Verfahrweg der Auftragseinrichtung zueinander richtig angeordnet sowie zugeordnet und können entsprechend verarbeitet werden. Diese spezielle Bildaufnahmetechnik ermöglicht somit das gleichzeitige und parallele Aufnehmen einzelner Kamerabilder, wodurch es erzielt wird, dass die Bildaufnahmefrequenz sowohl für die Führung bzw. die Regelung der Auftragseinrichtung als auch für die Online-Überwachung des aufgetragenen Klebstoffs erhöht wird, wobei die Bilder aller Kameras in einer Bildsequenz gespeichert werden.

Wenn die Bilder der drei Kameras in einer Bildsequenz gespeichert worden sind, wird beim Einlernen der Referenzkleberspur anschließend eine Parametrierung dieser Referenzspur durchgeführt. Für die Parametrierung wird der Roboterverfahrweg, die Roboterverfahrzeit, die Richtung, die Breite und die Güte der Klebespur verwendet. Somit ergibt sich für die Kleberspur eine Art Vektorkette, wodurch es möglich ist, die hohe Bildaufnahmefrequenz und die vergleichsweise kurzen Teilabschnitte (zwischen 1 und 3 mm) zu erzielen. Die Vektorvisierung hat ferner den Vorteil, dass die Kleberspur in Form einer Vektorkette in einem kameraübergreifenden, globalem Koordinatensystem abgelegt werden kann.

Wie aus Figur 5 ersichtlich ist, welche eine Nahtführung an einer Bauteilkante darstellt, wird in dem mittleren Streifen von Figur 5 online die Nahtinspektion ausgeführt, wobei das Kreissegment den Bereich darstellt, in welchem die erste Kamera für die Klebstoffüberwachung sorgt.

Auftragseinrichtungen bzw. Roboter arbeiten intern mit einem Interpolationstakt von beispielsweise 12 ms. Schneller als dieser Interpolationstakt kann die Regelung der Nahtführung gemäß dem unteren Streifen von Fig. 5 nicht erfolgen. Bei einer maximalen Roboterfahrgeschwindigkeit von 700 mm/s bedeutet dies nur, dass in 12 ms ein Weg von 8,4 mm zurück gelegt wird. Wird also zum Zeitpunkt x ein Korrekturwert ermittelt, so kann die Korrektur erst mit dem nächsten Interpolationstakt erfolgen, also 8,4 mm nach Ermittlung des Wertes. Dies hat zur Folge, dass die Erfassung der Referenzkante mindestens 8,4 mm vor der Düse erfolgen muss. Dieser Bereich wird durch die Anordnung der optischen Sensorik abgedeckt und durch den schnellen Auswertezyklus (< 5ms) werden Korrekturwerte rechtzeitig zur Verfügung gestellt. Da die Kameras ortsfest um die Auftragseinrichtung angebracht sind, verändert sich der Verlauf der Klebstoffbahn, wobei die Nahtkorrektur daher in dem ersten Streifen gemäß der ersten Kamera in den zweiten Streifen gemäß der zweiten Kamera oder in dem dritten Streifen gemäß der dritten Kamera durchgeführt werden kann. Wie bereits hinsichtlich der Online-Überwachung des Klebstoffauftrages beschrieben, wird folglich jeweils eine andere Kamera für die Nahtkorrektur aktiv, wenn die Referenznaht aus dem Sichtbereich der einen Kamera in den Sichtbereich der anderen Kamera wandert.

Der unterste Streifen von Fig. 5 zeigt auf der senkrechten Linie zur Kante des Bauteils ein helles Kreuz unmittelbar an der Bauteilkante, welches für die Nahtführung als Referenzkante verwendet wird. Parallel dazu wird in dem mittleren Streifen von Fig. 5 online die Nahtinspektion zur Überprüfung des Dichtmittelauftrags ausgeführt.

Falls die Kleberspur nun aus dem Sichtbereich einer Kamera läuft, befindet sich die Kleberspur übergangsweise im Überlappungsbereich der Winkelbereiche der beiden Kameras. Wenn nun die Kleberspur von dem Segment der Kreisbahn der einen Kamera über den Überlappungsbereich in das Segment der Kreisbahn einer anderen Kamera verläuft, wird von der einen zur anderen Kamera automatisch umgeschaltet. Dies ist insbesondere in Figur 4 durch die aktiven Sichtbereiche der einzelnen Kameras dargestellt

Die obigen Vorteile werden dadurch erzielt, dass die einzelnen Kameras einen Kreiscaliper bilden, dessen Mittelpunkt die Auftrageinrichtung 11 bildet, wobei die Suche sowohl nach der Referenzkante als auch nach den Kanten der Klebstoffspur auf einer Kreisbahn unmittelbar um die Auftragseinrichtung erfolgt. Hierzu ist es wesentlich, dass die einzelnen Kameras auf die Auftragseinrichtung ausgerichtet sind, wobei sich die axialen Längsachsen der einzelnen Kameras mit der Längsachse der Auftragseinrichtung schneiden.

Für die erfindungsgemäße Vorrichtung ist das nicht gezeigte Beleuchtungsmodul aus LEDs, insbesondere Infrarot-LEDs, UV-LEDs oder RGB-LEDs, aufgebaut Um möglichst geringe Bewegungsunschärfe bzw. hohe Kontraste bei der Bildaufnahme zu erhalten, können die LEDs geblitzt werden, d.h., dass kurze, starke Stromimpulse auf die Dioden im Bereich von 1,0. bis 0,01 ms aufgebracht werden. Dabei sind insbesondere derartige Leuchtdioden vorteilhaft, die verschiedenfarbiges Licht emittieren können, sodass der Sensoraufbau ohne Umbauten auf andere Klebertypen bzw. Kleberfarben umgestellt werden kann.

Im Folgenden wird nun eine Teach-In-Lauf bzw. ein Einlernen einer Referenzkleberspur erläutert.

Der Einlernvorgang der Referenzkleberspur kann durch Markieren der Spur vom Bediener begonnen werden, wodurch die Lage der Kleberspur angezeigt wird. Dies ist ausreichend, um in den nächsten Kamerabildern die Position und Richtung der Kleberspur voll automatisch zu erkennen, da die Bildaufnahmefrequenz entsprechend hoch ist und die einzelnen Bildaufnahmen sehr kurz hintereinander stattfinden, beispielsweise alle 1 mm bis 3 mm. Ab dem Startpunkt findet Bild für Bild die Kleberantastung statt, wobei die im aktuellen Bild gefundene Kleberspurposition und Kleberspurwinkel als A-Priori-Wissen für das kommende Bild verwendet wird. Somit wird das vollautomatische Erfassen der Kleberspur möglich, ohne dass ein Mensch das Bild bzw. die Lage der Kleberspur ermitteln bzw. bewerten muss. Als Folge davon kann der Suchbereich eingeschränkt bzw. angepasst werden.

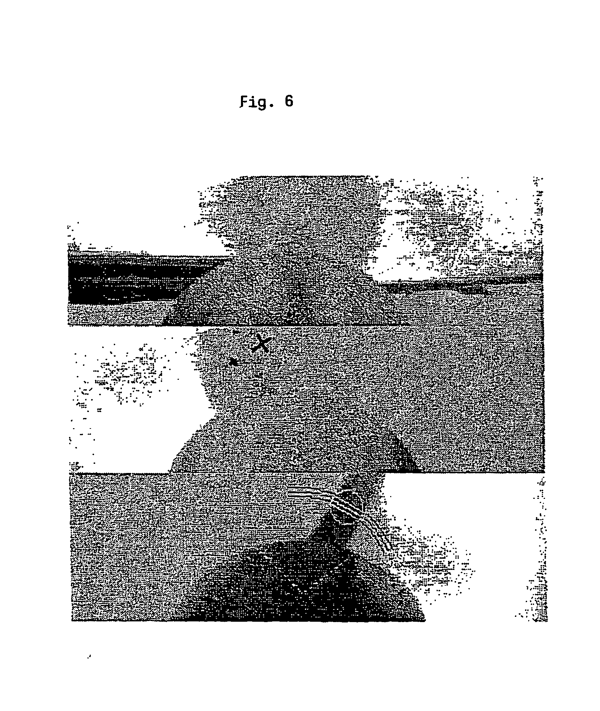

In Figur 6 ist eine Nahtführung im Überlappungsbereich von zwei Bauteilen insbesondere an einem Stoss von zwei Bauteilen dargestellt. Die zweite Kamera zeigt den gemäß den Partial-Scanverfahren ausgelesenen Streifen der zweiten Kamera, in welchem die Position der Überlappung der beiden Bleche zur Nahtführung als Refernzkontur bzw. Referenzkante ermittelt wird. Im untersten Streifen von Fig. 6 ist der Streifen der dritten Kamera dargestellt, in welchem parallel zur Nahtführung die aufgetragene Dichtmittelspur ausgewertet wird. Hierzu ist das Kreissegment in dem untersten Streifen dargestellt, in dessen Mitte die Kleberspur verläuft, was durch einen Kreis angezeigt ist. In dem obersten Streifen von Fig. 6 ist der Bildaufnahmestreifen der ersten Kamera dargestellt.

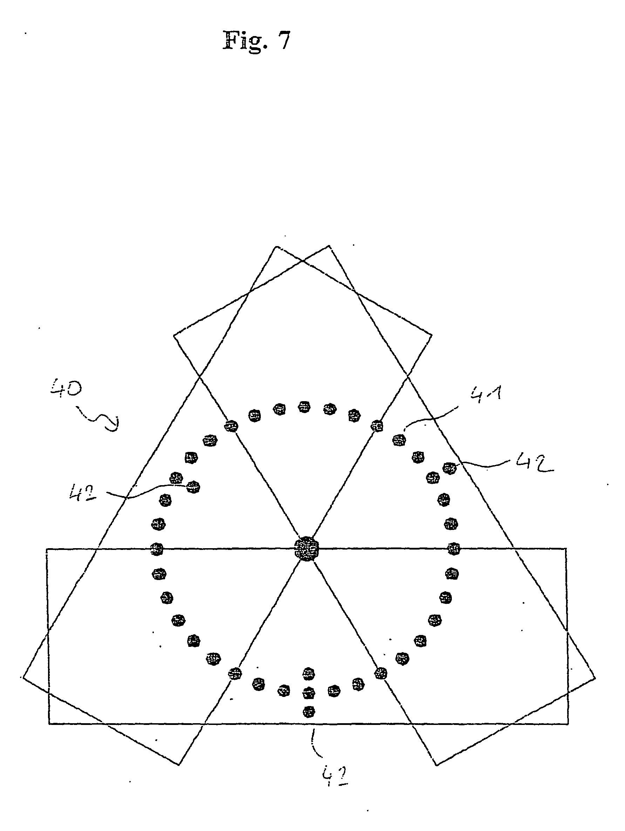

Figur 7 zeigt eine Kalibriereinrichtung 40 in Form einer kreisförmigen Kalibrierscheibe, um den einzelnen Kameras ihren Skalierungsfaktor, ihre Winkelzugehörigkeit und den Mittelpunkt sowie den Radius des Suchkreises zuzuordnen. Die Kalibrierscheibe besteht aus einzelnen auf einer Kreisbahn angeordneten Formelementen bzw. Dots 41, die jeweils in einem Winkelabstand von im wesentlichen 10° angeordnet sind. In gleichmäßigen Abstand voneinander sind ferner Markierungsstellen 42 angeordnet, um drei Kameras zu kalibrieren. Mittels einer Ausgleichsrechnung wird aus den Koordinaten der Mittelpunkte der einzelnen Dots zum einen der Skalierungsfaktor der einzelnen Kameras zum anderen der Mittelpunkt sowie der Radius des Suchbereichs berechnet. Durch die Markierungsstellen im Winkel von 0°, 120°, 240° im globalem Koordinatensystem kann die Winkelzuordnung und der jeweilige Sichtbereich der einzelnen Kameras bestimmt werden. Der Sichtbereich der einzelnen Kameras ist insbesondere durch die drei Rechtecke in Figur 7 dargestellt, wobei die Formelemente 41 der Kreisbahn des Kreiscalipers zur Erfassung der Klebstoffspur entsprechen können.

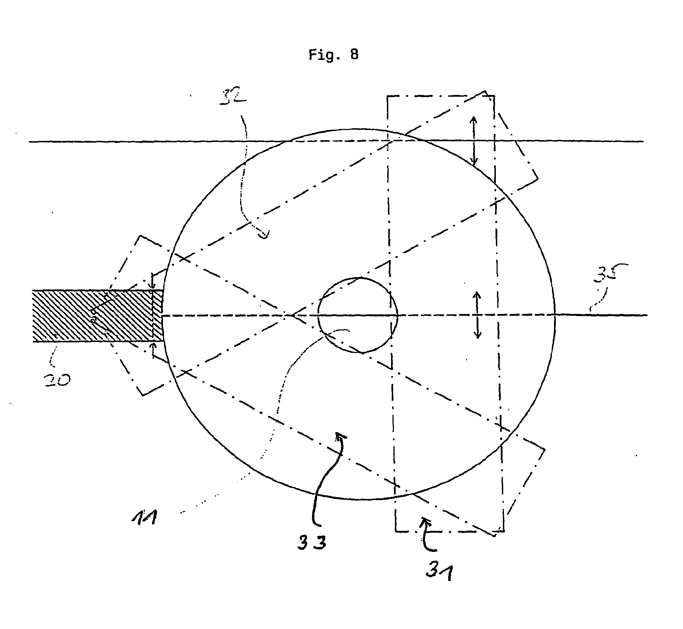

Um die Auftragseinrichtung 11 sind in Fig. 8 jeweils in Strichpunktlinie drei Streifen um die Auftragseinrichtung dargestellt, welche den Auslesebereich für den Partial-Scan der einzelnen Kameras darstellen. Der Streifen 31 der ersten Kamera ermittelt die Referenzkante 35, um die Auftragseinrichtung gemäß dem Verlauf der Referenzkante entsprechend zu steuern bzw. zu regeln. Bildstreifen 31 ist daher in Vorlaufrichtung ausgerichtet und vermisst die Lage der Referenzkante bzw. des Falzes 35, so dass die Auftragseinrichtung 11 das Dichtmittel auf die gemäß der Referenzkontur 35 korrigierte Bahn aufträgt. Nach Korrektur der Roboterbahn bzgl. der Karossenpositionierung erfolgt die Fügenahterkennung durch Anfahren der ersten Position und Aktivierung der Nahtführung. Die Roboterbahn erhält nach Freigabe des Ablaufes (Naht wird erkannt) kontinuierlich Korrekturwerte senkrecht zur eingelemten Auftragsrichtung. Dabei kann der Fangbereich ± 15mm betragen und wobei der Regelbereich < als ± 1 mm ist Die Kommunikation zwischen dem Bildverarbeitungssystem und der Robotik bzw. Auftragseinrichtung erfolgt beispielsweise durch eine normierte Ethernet-Schnittstelle mittels XML-Protokoll. In Nachlaufrichtung sind die beiden Bildstreifen 32 und 33 gezeigt, welche sich im Bereich der Dichtmittelspur 20 schneiden

Die Onlineüberwachung einer aufgebrachten Klebstoffspur wird nun kurz erläutert. Die in Figur 1 gezeigte Auftragseinrichtung 11 bringt die Klebstoffspur auf das Blech 30 auf, wobei die Auftragseinrichtung 11 mit den Kameras über dem Blech 30 verfahren wird und gemäß der Referenzkontur geregelt wird. Jedoch ist auch eine kinematische Umkehr möglich, d.h., dass das Blech 30 verfahren wird und die Auftragseinrichtung mit den Kameras ortsfest angeordnet ist. Die aufgetragene Klebstoffspur 20 wird von einer der Kameras 12, 13, 14 auf der gemäß Figur 5 erläuterten Kreisbahn des Kreiscalipers ermittelt und ausgewertet, wobei von jeder Kamera jeweils lediglich ein Streifen des Bildes aufgenommen wird und in einem einzigen Bild zusammengefügt wird. Entsprechend der Datenverminderung durch die Aufnahme von lediglich einem Streifen des Bildes jeder Kamera wird die Bildaufnahmefrequenz erhöht, wobei die einzelnen Bildstreifen in dem zusammengefügten Bild das synchrone und parallele sowie gleichzeitige Erfassen der drei Kamerabilder ermöglichen und wobei die einzelnen Bilder der drei Kameras unmittelbar ortsabhängig zugeordnet werden können. Somit wird eine Nahtführung und Onlineüberprüfung der Klebstoffspur in Echtzeiten möglich, welche durch die hohe Bildaufnahmefrequenz sowohl bei Regelung gemäß der Referenzkante als auch beim Überprüfen der aufgebrachten Kleberspur eine hohe Genauigkeit bei hohen Verfahrgeschwindigkeiten erzielt.

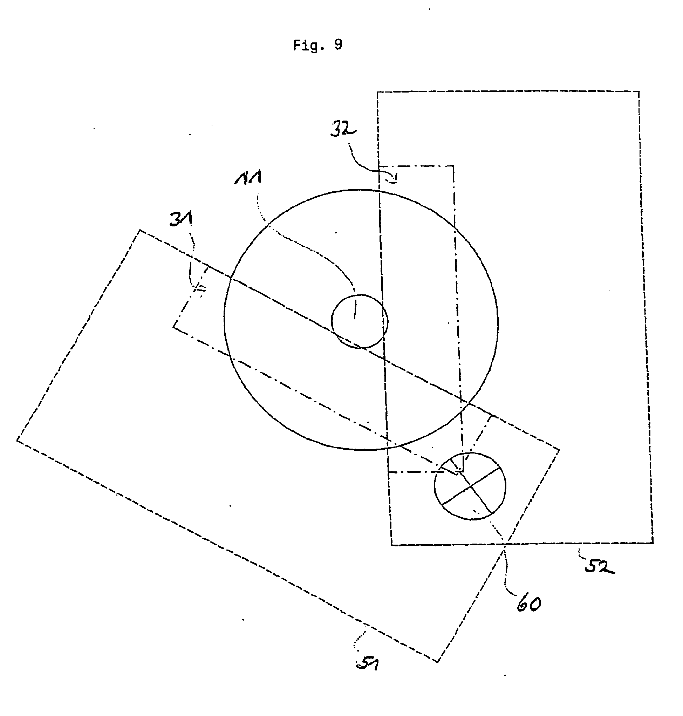

Fig. 9 zeigt nun das Grundprinzip der 3D-Lageerkennung, welche vor dem Dichtmittelauftrag erfolgt. Da die Bleche, beispielsweise Rohkarossen von Fahrzeugen, von der Fördertechnik nicht stets in der gleichen Position positioniert werden und die Lage der Fügenähte toleranzbehaftet ist, erweist sich eine Grobjustierung bzw. Grobpositionierung der erfindungsgemäßen Vorrichtung als vorteilhaft. Hierzu werden die Kamerabildfelder auf Großbild bzw. Standardgröße oder Vollbild umgestellt, was jeweils durch die gestrichelte Linie 51 bzw. 52 dargestellt ist. Das Standardkamerabildfeld 51 zeigt den erweiterten Sichtbereich einer Kamera, welche nach dem partial-scan Verfahren lediglich den entsprechenden Streifen 31 ausliest. Analog hierzu ist der Streifen 32 im Verhältnis zu dem Standardkamerabildfeld 52 verkleinert. Beispielsweise wird der Bildstreifen 31 bzw. 32 mit Hilfe einer geeigneten Software auf beispielsweise die halbe Breite und 1/5 der Höhe verkleinert. Aus Gründen der Übersichtlichkeit ist das entsprechende Standardkamerabildfeld 53 mit dem entsprechenden Bildstreifen 33 weggelassen worden. Bei der 3D-Lageerkennung wird ein beliebiges Merkmal 60 vermessen, welches sich in dem überlappenden Sichtbereich der beiden Kamerabildfelder 51 und 52 befindet. Da sich die beiden Kamerabildfelder 51 und 52 in dem Bereich des Merkmals 60 überlappen, kann das Verfahren der Stereometrie verwendet werden, um eine dreidimensionale Auswertung, beispielsweise eines Loches oder einer Bauteilkante zu ermöglichen. Wenn beispielsweise eine Naht von zwei Bauteilen erkannt worden ist, so kann die Auftragsvorrichtung mit Hilfe der optischen Sensorik eine automatische Positionskorrektur vornehmen, um daraufhin die Bahnkorrektur der Roboterbahn bzw. Auftragseinrichtungsbahn online vorzunehmen, wie in Fig. 8 beschrieben. Gleichzeitig kann die identische Sensorik online die Qualitätskontrolle der Nahtabdichtung durchführen wie ebenso gemäß Fig. 8 beschrieben. Somit ist für eine Positionskorrektur der Auftragseinrichtung und die Onlineregelung der Verlaufsbahn der Auftragseinrichtung sowie die Onlineüberwachung des Dichtmittelauftrags mit einer einzigen Sensorik möglich, welche beispielsweise aus drei Kameras aufgebaut ist, die um die Auftragseinrichtung ortsfest angebracht sind. Dabei wird erfindungsgemäß lediglich ein Streifen des Bildes 31, 32, 33 aufgenommen, um geringe Datenströme zur Bildaufnahmefrequenzerhöhung zu verwenden. Der Einsatz der partial-scan Technik ermöglicht so beispielsweise eine Bildwiederholrate von in etwa 240 Hz oder niedriger. Die Aufnahmen erfolgen also in definierten festen Zeitabständen und sind unabhängig von der Robotergeschwindigkeit bzw. Auftragseinrichtungsgeschwindigkeit. Zusätzlich wird im Auswerterechner eine Bilderfassungskarte (Framegrabber = PC-Einsteckkarte zum Einzug von Bildern aus der Kamera) eingesetzt, die es ermöglicht, synchron und parallel von allen drei Kameras Bilder zu erfassen. Die Bilder werden anschließend zu einem Bild (3 Streifen untereinander) zusammengefügt, was den Vorteil ermöglicht, dass jeweils drei Bilder sofort einander ortsabhängig entsprechend zugeordnet sind.

Ferner ist es insbesondere ausreichend, beispielsweise die Dichtmittelspur in einem der drei Bilder zu suchen und auszuwerten. Überschreitet der Winkelwert einen bestimmten Betrag, so wird automatisch auf die benachbarte Kamera umgeschaltet. Der Winkelwert wird dabei auf einen Vollkreis von 360° bezogen, wodurch sich ein globales Koordinatensystem ergibt. Dabei weist jede Kamera einen Überlappungsbereich zur nächsten Kamera auf. Die Auswahl der Kamera erfolgt nicht gebunden an die Auftragseinrichtungsposition bzw. Roboterposition bzw. gebunden an eine zeitliche Komponente, sondern bezieht sich stets auf die aktuellen Inspektionsergebnisse, welche im globalen Koordinatensystem erfasst werden. Dadurch werden Fehler vermieden, welche durch die relativ ungenauen Robotersteuerungen bzw. Auftragseinrichtungssteuerungen erzeugt werden.

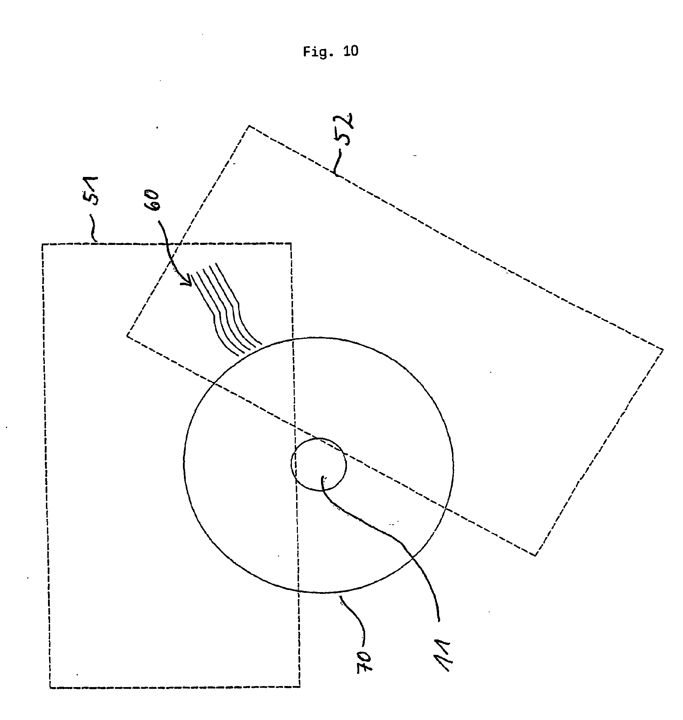

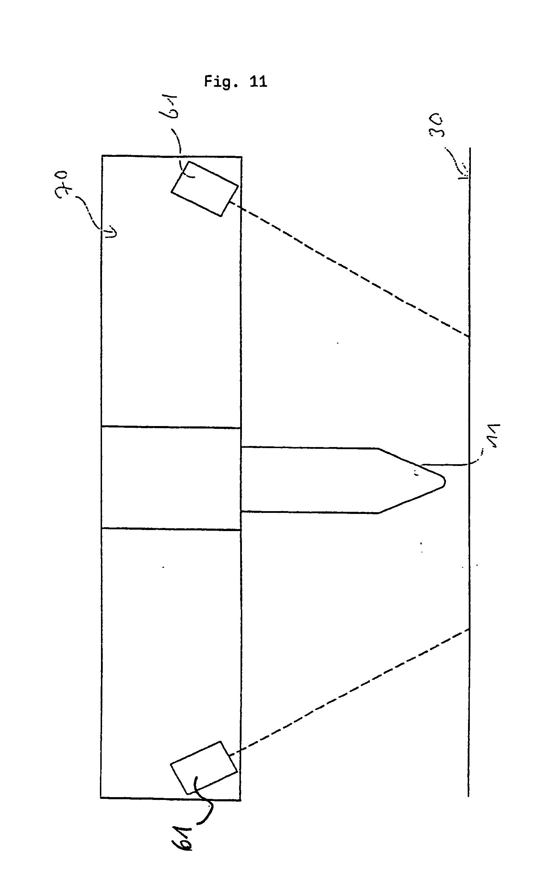

Gemäß den Figuren 10 und 11 wird nun die dreidimensionale Profilauswertung mit Hilfe einer Projektion beschrieben, um für eine Positionskorrektur der Auftragseinrichtung zu sorgen, wie bereits gemäß Figur 9 erläutert. In Fig. 10 sind aus Übersichtlichkeitsgründen wiederum nur zwei Kamerasichtfelder 51, 52 gestrichelt dargestellt. Im Überlappungsbereich der beiden Kamerasichtfelder 51, 52 sind eine Vielzahl von Laserlinien 60 dargestellt, weiche zur Profilauswertung hinsichtlich der Höhe und der Kontur von Strukturraupen und auf die Erzeugung von sogenannten Softkonturen verwendet werden. Die Laserlinien 60 werden von einer Projektionseinrichtung erzeugt, welche beispielsweise an dem optischen Sensor mit drei Kameras angeordnet sein kann. Ferner kann die Projektionseinrichtung jedoch auch unmittelbar an der Auftragseinrichtung 11 angeordnet sein. Der Sensor mit den drei Kameras ist schematisch durch den Kreis 70 dargestellt. Durch die auf das Bauteil 30 bzw. Blech 30 projizierten Laserlinien bzw. Laserstreifen werden Konturen auf dem Bauteil hervorgehoben, die mit üblicher Bildverarbeitung für die dreidimensionale Auswertung nicht verwendbar sind. Mit Hilfe der Laserlinien auf dem Bauteil werden künstliche Merkmale erzeugt, die dann mittels der Bildverarbeitung gemäß der Stereometrie ausgewertet werden können. Somit zeigt Fig. 10 das Prinzip der dreidimensionalen Lageerkennung vor dem Dichtmittelauftrag, falls keine harten, auswertbaren Merkmale vorhanden sind. Im Gegensatz dazu ist in der bereits erwähnten Fig. 9 eine harte Kontur durch das Merkmal 60 beschrieben worden.

In Fig. 11 ist die Auftragseinrichtung 11 mit der daran angebrachten Sensoreinheit 70 als Seitenansicht dargestellt, wobei der Sensor 70 neben den drei Kameras beispielsweise zumindest noch zwei Projektionseinrichtungen 61 aufweisen kann, weiche Laserlinien auf das Blech bzw. das Substrat 30 projizieren, wie schematisch durch die gestrichelte Linie dargestellt. Wenn mehrere Projektionseinrichtungen 61 rund um die Auftragseinrichtung angeordnet sind, kann eine lückenlose Kontur auf dem Blech 30 erzeugt werden, wodurch aufgrund der Kalibrierung von Sensor und Projektionseinrichtung die lückenlose Kontur zur dreidimensionalen Auswertung verwendet werden kann. Folglich zeigt Fig. 11 beispielhaft zwei Projektionseinrichtungen 61. Derartige Projektionseinrichtungen können beispielsweise einen Laser auf das Substrat bzw. das Bauteil projizieren oder können aus einem LED-Modul aufgebaut sein, welches eine Vorsatzlinse zur Erzeugung einer Linie auf dem Substrat umfasst.

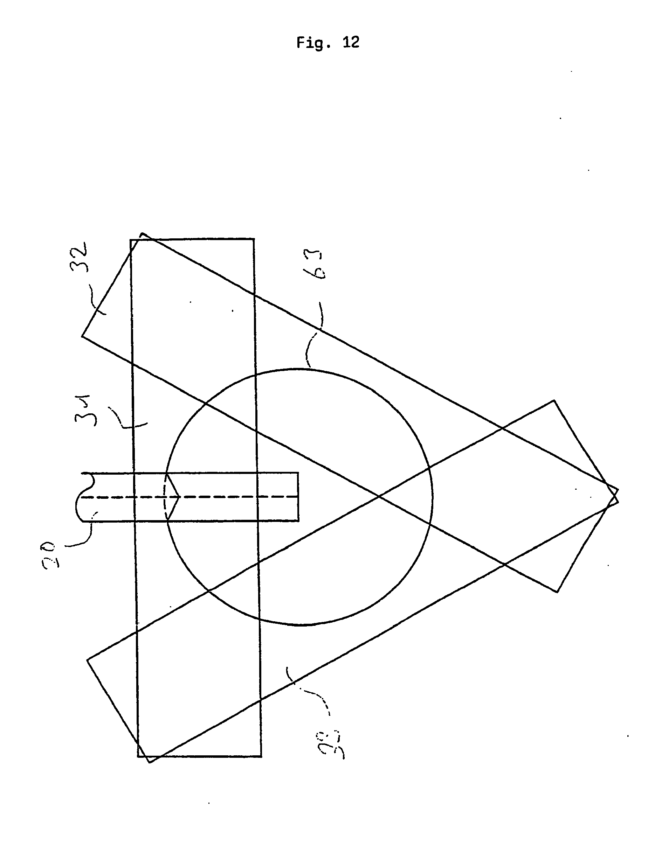

Die Projektionseinrichtungen können sowohl zur dreidimensionalen Lagekorrektur vor dem Dichtmittelauftrag als auch zur Onlinehöhen- und -profilauswertung des Dichtmittelauftrags verwendet werden. Zur dreidimensionalen Lagekorrektur können die Projektionseinrichtungen vorzugsweise mehrere Linien projizieren. Für die Höhenauswertung sollten eine oder mehrere Projektionseinrichtungen vorgesehen sein, die eine Linie oder wie in Fig. 12 dargestellt eine kreisrunde Kontur auf das Bauteil bzw. das Substrat projizieren. Dabei können sich mehrere Linien für die Auswertung als vorteilhaft erweisen.

Wie in Fig. 12 gezeigt, kann auch die Dichtmittelhöhe bzw. Dichtmittelkontur und Dichtmittellage gemäss dem Triangulationsprinzip mittels der Bildverarbeitung gleichzeitig bzw. unmittelbar nach dem Dichtmittelauftrag ermittelt werden. Hierzu wird eine beispielsweise runde Kontur 63 durch die Projektionseinrichtungen auf das Blech 30 aufgebracht, wobei das Dichtmittel bzw. die Dichtmittelspur 20 für eine Höhen- und Lageveränderung der projizierten Kontur 63 sorgt. Diese geänderte runde Projektionskontur 63 wird wiederum von den einzelnen Objektfeldern der einzelnen Kameras ermittelt. Die projizierte Kontur 63 wird dabei durch das Dichtmittel 20 in seiner ursprünglichen Form deformiert, so dass sich daraus die Höhe, Kontur, aber auch die Breite und die Lage des aufgebrachten Dichtmittels 20 gemäss dem Triangulationsprinzip bestimmt werden kann. Bei dem Prinzip der Triangulation liegt zwischen der Kamera und der Projektionseinrichtung ein definierter Winkel vor, wobei die Kamera und die Projektionseinrichtung zueinander kalibriert werden. Durch den Winkel erscheinen die durch die Projektionseinrichtung beleuchteten Substratkonturen je nach Höhe an unterschiedlichen Stellen auf dem lichtempfindlichen Chip bzw. CCD-Chip oder CMOS-Chip der Kamera, so dass durch die Kalibrierung der Kamera und der Projektionseinrichtung die Höhe und Kontur des Dichtmittels errechnet werden kann.

Gemäss einer nicht dargestellten Ausführungsform kann der aus insbesondere drei Kameras aufgebaute Sensor, welcher um die Auftragseinrichtung angeordnet ist, derart aufgebaut sein, dass die optischen Achsen der einzelnen Kameras parallel zueinander ausgerichtet sind, wobei die Kameras insbesondere jeweils senkrecht auf das Substrat bzw. Blech ausgerichtet sind. Durch eine derartige Anordnung kann der Sensor besonders nah an dem Bereich des Dichtmittelauftrags angeordnet werden, wobei die Sichtbereiche der einzelnen Kameras je nach deren Weitwinkel einen mehr oder weniger großen Überlappungsbereich aufweisen.

## Patentansprüche

1. Verfahren zum automatischen Aufbringen und Überwachen einer auf einem Substrat (30) aufzubringenden Struktur (20), vorzugsweise einer Kleberraupe oder Kleberspur, wobei
eine Referenzkontur (35) von zumindest einer ersten Kamera (12, 13, 14) in Vorlaufrichtung ermittelt wird, wobei eine Bauteilkante vorzugsweise zwischen zwei zu verbindenden Elementen ermittelt wird, um den Verlauf der aufzubringenden Struktur (20) gemäss der Referenzkontur (35) zu regeln,
wobei die von der ersten Kamera (12, 13, 14) aufgenommenen Bilder zur Führung einer Auftragseinrichtung (11) für die aufzubringende Struktur (20) verwendet werden,
die aufzubringende Struktur (20) von der Auftragseinrichtung (11) gemäss der von der ersten Kamera (12, 13, 14) ermittelten Referenzkontur (35) auf das Substrat (30) aufgebracht wird,
und die durch die Auftragseinrichtung (11) auf dem Substrat (30) aufgebrachte Struktur (20) durch zumindest eine zweite Kamera (12, 13, 14) in Nachlaufrichtung überwacht wird, **dadurch gekennzeichnet, dass**
eine Projektion zur dreidimensionalen Auswertung auf den Bereich der Referenzkontur (35) aufgebracht wird, wobei eine oder mehrere Laser- oder LED projizierte Linien als Projektion zur dreidimensionalen Lagekorrektur in Vorlaufrichtung auf das Substrat ( 30) aufgebracht werden.

2. Verfahren nach Anspruch 1, **dadurch gekennzeichnet, dass** die Referenzkontur (35) von zumindest zwei Kameras (12, 13, 14) ermittelt wird, um eine dreidimensionale Positionskorrektur für die Auftragseinrichtung (11) mit Hilfe des Stereometrieverfahrens durchzuführen.

3. Verfahren nach Anspruch 2, **dadurch gekennzeichnet, dass** die beiden Kameras (12, 13, 14) das Substrat (30), einen Bauteilabschnitt oder ein oder mehrere Bauteile als Vollbild oder Grossbild aufnehmen, wobei die Vollbilder oder Grossbilder der beiden Kameras (12, 13, 14) einen Überlappungsbereich in Vorlaufrichtung aufweisen, wobei sich die im Überlappungsbereich ergebende dreidimensionale Lageerkennung der Referenzkontur (35) zur Justierung der Auftragseinrichtung (11) vor dem Aufbringen der Struktur (20)verwendet wird.

4. Verfahren nach Anspruch 1, **dadurch gekennzeichnet, dass** die Referenzkontur (35) von nur einer ersten Kamera (12, 13, 14) in Vorlaufrichtung zur Regelung des Verlaufes der aufzubringenden Struktur (20) gemäss der Referenzkontur (35) ermittelt wird, und wobei von der ersten Kamera (12, 13, 14) lediglich ein Streifen des Bildes zur Online-Regelung des Auftragens der Kleberstruktur aufgenommen wird.

5. Verfahren nach Anspruch 4, **dadurch gekennzeichnet, dass** von der zweiten Kamera (12, 13, 14) lediglich ein Streifen des Bildes zur Online-Überwachung der aufgebrachten Struktur (20) verwendet wird.

6. Verfahren nach Anspruch 4 und 5 **dadurch gekennzeichnet, dass** die Streifen der Bilder der beiden Kameras (12, 13, 14) unter Bildung einer einzigen Bildsequenz aufgenommen werden und die Bildaufnahmefrequenz entsprechend der Datenverminderung durch die Aufnahme von lediglich einem Streifen des Bildes erhöht wird.

7. Verfahren nach zumindest einem der Ansprüche 4 bis 6 **dadurch gekennzeichnet, dass** jede Kamera (12, 13, 14) nur einen Teil, insbesondere in etwa ein Drittel, Viertel oder Fünftel, der Bildzeilen als Streifen des Bildes verwendet und die Bildaufnahmefrequenz entsprechend vervielfacht wird, insbesondere im wesentlichen verdreifacht, vervierfacht oder verfünffacht wird.

8. Verfahren nach zumindest einem der vorherigen Ansprüche **dadurch gekennzeichnet, dass** eine Parametrierung und eine Aufnahme der Auftragsbahn in einem einzigen Bildaufnahmelauf erfolgt, wobei die Bilder aller Kameras (12, 13, 14) in einer Bildsequenz gespeichert werden.

9. Verfahren nach Anspruch 8 **dadurch gekennzeichnet, dass** die gespeicherte Bildsequenz für die Parametrierung den Roboterverfahrweg und/oder die Roboterverfahrzeit oder die Roboterkoordinaten, die Position, den Kontrast, den Grauwert oder Farbwert, die Breite und Güte der aufgetragenen Struktur (20) verwendet.

10. Verfahren nach Anspruch 8 oder 9 **dadurch gekennzeichnet, dass** die aufzubringende Struktur (20) durch die Parametrierung im wesentlichen in einer Vektorkette abgelegt wird, wobei eine hohe Bildaufnahmefrequenz und kurze Teilabschnitte von im wesentlichen zwischen 0,5 und 4 mm, insbesondere 1 und 3 mm, vorgenommen werden.

11. Verfahren nach einem der vorherigen Ansprüche **dadurch gekennzeichnet, dass** drei Kameras (12, 13, 14) verwendet werden, wobei jede Kamera (12, 13, 14) sowohl für die Regelung in Vorlaufrichtung gemäss der Referenzkontur (35) als auch für die Überwachung der aufgebrachten Struktur (20) in Nachlaufrichtung verwendbar ist, wobei die drei Kameras (12, 13, 14) jeweils einen Überlappungsbereich zur benachbarten Kamera (12, 13, 14) auf einer Kreisbahn aufweisen.

12. Verfahren nach Anspruch 11 **dadurch gekennzeichnet, dass** die Winkelwerte der Kreisbahn von 0 bis 360 ein globales Koordinatensystem bilden, wobei den Bildern der einzelnen Kameras (12, 13, 14) ein Segment der Kreisbahn zugeordnet wird.

13. Verfahren nach Anspruch 11 oder 12 **dadurch gekennzeichnet, dass** bei dem Verlauf der Referenzkontur (35) oder der Kleberspur von einer Kamera (12, 13, 14) zur nächsten Kamera (12, 13, 14) automatisch umgeschaltet wird, wenn der Verlauf der Auftragsstruktur oder der Referenzkontur (35) von dem Segment der Kreisbahn einer Kamera (12, 13, 14) über den Überlappungsbereich in das Segment der Kreisbahn einer anderen Kamera (12, 13, 14) wechselt.

14. Vorrichtung zum automatischen Aufbringen und Überwachen einer auf einem Substrat (30)aufzubringenden Struktur (20), vorzugsweise einer Kleberraupe oder Kleberspur, zur Durchführung eines Verfahrens gemäss den Ansprüchen 1 bis 13, wobei zumindest ein Beleuchtungsmodul und eine Sensoreinheit vorgesehen ist, wobei die Sensoreinheit aus mindestens zwei Kameras (12, 13, 14) aufgebaut ist, wobei die Kameras (12, 13, 14) um eine Auftragseinrichtung (11) für die aufzubringende Struktur (20) vorgesehen sind und an dieser derart angeordnet sind, dass zumindest eine Kamera (12, 13, 14) in Vorlaufrichtung zur Regelung der Auftragseinrichtung (11) mittels einer Referenzkontur (35) und zumindest eine Kamera (12, 13, 14) in Nachlaufrichtung zur gleichzeitigen Online-Überwachung der auf dem Substrat (30) aufgebrachten Struktur (20) vorgesehen ist, **dadurch gekennzeichnet, dass** eine Projektionseinrichtung zur dreidimensionalen Auswertung für die Referenzkontur (35) vorgesehen ist,
wobei eine oder mehrere Laser- oder LED projizierte Linien als Projektion zu dreidimensionalen Lagekorrekturen in Vorlaufrichtung auf das Substrat (30) aufgebracht werden.

15. Vorrichtung nach Anspruch 14, **dadurch gekennzeichnet, dass** sich die optischen Achsen der einzelnen Kameras (12, 13, 14) in Blickrichtung im wesentlichen mit der axialen Längsachse der Auftragseinrichtung (11) schneiden oder die optischen Achsen der einzelnen Kameras (12, 13, 14) parallel zueinander ausgerichtet sind, und insbesondere senkrecht auf das Substrat (30) ausgerichtet sind.

16. Vorrichtung nach Anspruch 14 oder 15, **dadurch gekennzeichnet, dass** die einzelnen Kameras (12, 13, 14), insbesondere drei Kameras (12, 13, 14), in Umfangsrichtung in jeweils gleichem Abstand voneinander angeordnet sind.

17. Vorrichtung nach einem der Ansprüche 14 bis 16, **dadurch gekennzeichnet, dass** die einzelnen Kameras (12, 13, 14) derart zusammenwirken, dass die Bilder aller Kameras (12, 13, 14) in einer Bildsequenz gespeichert werden.

18. Vorrichtung nach Anspruch 17, **dadurch gekennzeichnet, dass** von jeder Kamera (12, 13, 14) lediglich ein Streifen des Bildes unter Bildung eines Teils der Bildsequenz aufgenommen wird.

19. Vorrichtung nach Anspruch 18, **dadurch gekennzeichnet, dass** die Bildaufnahmefrequenz entsprechend der Datenverminderung durch die Aufnahme von lediglich einem Streifen des Bildes erhöht wird.

20. Vorrichtung nach einem der Ansprüche 14 bis 19, **dadurch gekennzeichnet, dass** die Projektionseinrichtung an der Auftragseinrichtung (11) vorgesehen ist, welche einen oder mehrere Merkmale, insbesondere Streifen, auf das Substrat (30) für eine dreidimensionale Auswertung projiziert,

21. Verfahren nach Anspruch 20 **dadurch gekennzeichnet, dass** zumindest zwei Projektionseinrichtungen rund um die Auftragseinrichtung (11) angeordnet sind.

22. Vorrichtung nach einem der Ansprüche 14 bis 21, **dadurch gekennzeichnet, dass** die Kameras (12, 13, 14) derart um die Auftragseinrichtung (11) angeordnet sind, dass zumindest eine im wesentlichen kreisförmige Kantenantastung, insbesondere in Form eines Kreiscalipers, gebildet wird, dessen Mittelpunkt die Auftragseinrichtung (11) bildet, wobei insbesondere die Kameras (12, 13, 14) auf einen Kreis um die Auftragseinrichtung (11) ausgerichtet sind, dessen Mittelpunkt im wesentlichen mit dem Mittelpunkt der Auftragseinrichtung (11) übereinstimmt.

23. Vorrichtung nach einem der Ansprüche 14 bis 22, **dadurch gekennzeichnet, dass** die einzelnen Kameras (12, 13, 14) einen Überlappungsbereich von jeweils 30° bis 90°, insbesondere im wesentlichen 60°, zur nächsten Kamera (12, 13, 14) aufweisen.

24. Vorrichtung nach einem der vorhergehenden Ansprüche 14 bis 23, **dadurch gekennzeichnet, dass** das Beleuchtungsmodul aus LEDs, insbesondere Infrarot-LEDs, UV-LEDs oder RGB-LEDs aufgebaut ist.

25. Vorrichtung nach Anspruch 24, **dadurch gekennzeichnet, dass** die LEDs geblitzt werden, wobei Stromimpulse von im wesentlichen 1,0 bis 0,01 ms verwendet werden.

26. Vorrichtung nach einem Ansprüche 14 bis 25, **dadurch gekennzeichnet, dass** zur Kalibrierung der einzelnen Kameras (12, 13, 14) für die Zuordnung der Winkelzugehörigkeit eine Kalibriervorrichtung mit einzelnen Formelementen verwendet wird, wobei die Formelemente insbesondere einen Winkelabstand von im wesentlichem 10° aufweisen.

27. Vorrichtung nach Anspruch 26, **dadurch gekennzeichnet, dass** die Kalibriervorrichtung zu- mindest drei Markierungsstellen aufweist, die in einem Kreisbogen der Kalibriervorrichtung von im wesentlichen 0°, 120° und 240° angeordnet sind, um drei Kameras (12, 13, 14) zu kalibrieren.

28. Vorrichtung nach Anspruch 27, **dadurch gekennzeichnet, dass** sich die Markierungsstellen auf der Kreisbahn in einem Winkelbereich von jeweils im wesentlichen 10° erstrecken, wobei die Markierungsstellen insbesondere durch zumindest zwei Formelemente gebildet werden.

## Claims

1. A method for automatically applying and controlling a structure (20) to be applied to a substrate (30), preferably an adhesive bead or adhesive trail,
a reference outline (35) being determined by at least a first camera (12, 13, 14) in a forward direction, a component edge being determined preferably between two elements to be connected in order to regulate the course of the structure (20) to be applied according to the reference outline (35), the images taken by the first camera (12, 13, 14) being used to guide an application device (11) for the structure (20) to be applied,
the structure (20) to be applied being applied onto the substrate (30) by the application device (11) according to the reference outline (35) determined by the first camera (12,13,14),
and the structure (20) applied to the substrate (30) by the application device (11) being controlled by at least a second camera (12, 13, 14) in the tracking direction, **characterised in that**
a projection is applied onto the region of the reference contour (35) for three-dimensional evaluation, one or a number of laser or LED-projected lines being applied to the substrate (30) as a projection for three-dimensional position correction in the forward direction.

2. The method according to Claim 1, **characterised in that** the reference outline (35) is determined by at least two cameras (12, 13, 14) in order to implement a three-dimensional position correction for the application device (11) using the stereometry method.

3. The method according to Claim 2, **characterised in that** the two cameras (12, 13, 14) record the substrate (30), a component section or one or more components as a complete image or large-scale image, the complete images or large-scale images of the two cameras (12, 13, 14) having an overlap region in the forward direction, the three-dimensional position detection of the reference outline (35) occurring in the overlap region being used in order to adjust the application device (11) before applying the structure (20).

4. The method according to Claim 1, **characterised in that** the reference outline (35) is only determined by a first camera (12, 13, 14) in the forward direction in order to regulate the course of the structure (20) to be applied according to the reference outline (35), and only one strip of the image being recorded by the first camera (12, 13, 14) for on-line regulation of the application of the adhesive structure.

5. The method according to Claim 4, **characterised in that** only one strip of the image is used by the second camera (12, 13, 14) for online controlling of the applied structure (20).

6. The method according to Claim 4 and 5, **characterised in that** the strips of the images of the two cameras (12, 13, 14) are recorded such as to form a single image sequence, and the image recording frequency is increased according to the decrease in data by recording just one strip of the image.

7. The method according to at least one of Claims 4 to 6, **characterised in that** each camera (12, 13, 14) only uses part, in particular for example a third, a quarter or a fifth, of the image lines as a strip of the image, and the image recording frequency is correspondingly multiplied, in particular substantially multiplied by three, by four or by five.

8. The method according to at least one of the preceding claims, **characterised in that** parameterisation and recording of the application path takes place in a single image recording operation, the images of all of the cameras (12, 13, 14) being stored in an image sequence.

9. The method according to Claim 8, **characterised in that** the stored image sequence is used for the parameterisation of the robot path of travel and/or the robot time of travel or the robot coordinates, the position, the contrast, the grey value or colour value, the width and quality of the structure (20) applied.

10. The method according to Claim 8 or 9, **characterised in that** the structure (20) to be applied is substantially deposited in a vector chain, a high image recording frequency and short sections of substantially between 0.5 and 4 mm, in particular 1 and 3 mm, being implemented.

11. The method according to any of the preceding claims, **characterised in that** three cameras (12, 13, 14) are used, each camera (12, 13, 14) being usable both for regulation in the forward direction according to the reference outline (35) and for the control of the applied structure (20) in the tracking direction, the three cameras (12, 13, 14) respectively having an overlap region with the adjacent camera (12, 13, 14) over a circular path.

12. The method according to Claim 11, **characterised in that** the angle values of the circular path of from 0 to 360 form a global coordinate system, a segment of the circular path being assigned to the images of the individual cameras (12, 13, 14).

13. The method according to Claim 11 or 12, **characterised in that** over the course of the reference outline (35) or the adhesive trail one automatically switches from one camera (12, 13, 14) to the next camera (12, 13, 14) when the course of the application structure or of the reference outline (35) changes from the segment of the circular path of a camera (12, 13, 14) via the overlap region into the segment of the circular path of another camera (12, 13, 14).

14. A device for automatically applying and controlling a structure (20) to be applied to a substrate (30), preferably an adhesive bead or adhesive trail, in order to implement a method according to Claims 1 to 13, at least one illumination module and one sensor unit being provided, the sensor unit being designed with at least two cameras (12, 13, 14), the cameras (12, 13, 14) being formed by an application device (11) for the structure (20) to be applied and being arranged on the latter such that at least one camera (12, 13, 14) is provided in the forward direction in order to regulate the application device (11) by means of a reference outline (35), and at least one camera (12, 13, 14) is provided in the tracking direction for simultaneous on-line control of the structure (20) applied to the substrate (30), **characterised in that** a projection device is provided for three-dimensional evaluation for the reference outline (35),
one or more laser or LED-projected lines being applied to the substrate (30) as a projection for three-dimensional position corrections in the forward direction.

15. The device according to Claim 14, **characterised in that,** in the viewing direction, the optical axes of the individual cameras (12, 13, 14) substantially cross the axial longitudinal axis of the application device (11) or the optical axes of the individual cameras (12, 13, 14) are aligned parallel to one another, and in particular are aligned perpendicularly to the substrate (30).

16. The device according to Claim 14 or 15, **characterised in that** the individual cameras (12, 13, 14), in particular three cameras (12, 13, 14), are arranged equal distances apart from one another in the circumferential direction.

17. The device according to any of Claims 14 to 16, **characterised in that** the individual cameras (12, 13, 14) interact such that the images of all of the cameras (12, 13, 14) are stored in an image sequence.

18. The device according to Claim 17, **characterised in that** just one strip of the image is recorded by each camera (12, 13, 14) such as to form part of the image sequence.

19. The device according to Claim 18, **characterised in that** the image recording frequency is increased in accordance with the decrease in data by recording just one strip of the image.

20. The device according to any of Claims 14 to 19, **characterised in that** the projection device which projects one or more features, in particular strips, onto the substrate (30) for three-dimensional evaluation, is provided on the application device (11).

21. The method according to Claim 20, **characterised in that** at least two projection devices are disposed around the application device (11).

22. The device according to any of Claims 14 to 21, **characterised in that** the cameras (12, 13, 14) are arranged around the application device (11) such that at least one substantially circular edge sensor, in particular in the form of a circular caliper, is formed, the centre point of which forms the application device (11), in particular the cameras (12, 13, 14) being aligned to a circle around the application device (11), the centre point of which substantially corresponds to the centre point of the application device (11).

23. The device according to any of Claims 14 to 23, **characterised in that** the individual cameras (12, 13, 14) have an overlap region of respectively 30° to 90°, in particularly substantially 60°, with the next camera (12, 13, 14).

24. The device according to any of the preceding Claims 14 to 23, **characterised in that** the illumination module is formed from LEDs, in particular infrared LEDs, UV LEDs or RGB LEDs.

25. The device according to Claim 24, **characterised in that** the LEDs are flashed, current pulses of substantially 1.0 to 0.01 ms being used.

26. The device according to any of Claims 15 to 27, **characterised in that** a calibrating device with individual moulded elements is used for calibrating the individual cameras (12, 13, 14) for the assignment of the angular association, the moulded elements having in particular an angular separation of substantially 10°.

27. The device according to Claim 26, **characterised in that** the calibrating device has at least three marking points which are disposed in a circular arc of the calibrating device of substantially 0°, 120° and 240° in order to calibrate three cameras (12, 13, 14).

28. The device according to Claim 27, **characterised in that** the marking points on the circular path extend in an angular range of respectively substantially 10°, the marking points being formed in particular by at least two moulded elements.

## Revendications

1. Procédé d'application et de contrôle automatiques d'une structure (20) à appliquer sur un substrat (30), de préférence d'une chenille de colle ou d'une trace de colle, dans lequel
un contour de référence (35) est déterminé par au moins une première caméra (12, 13, 14) dans le sens de l'avancée, une arête de composant étant déterminée de préférence entre deux éléments à relier de manière à régler l'évolution de la structure à appliquer (20) en fonction du contour de référence (35), les images prises par la première caméra (12, 13, 14) étant utilisées pour guider un dispositif d'application (11) de structure à appliquer (20),
la structure à appliquer (20) est appliquée sur le substrat (30) par le dispositif d'application (11) en fonction du contour de référence (35) déterminé par la première caméra (12, 13, 14),
et la structure (20) appliquée sur le substrat (30) par le dispositif d'application (11) est contrôlée dans le sens du suivi par au moins une deuxième caméra (12, 13, 14),
**caractérisé en ce que**
une projection destinée à une évaluation tridimensionnelle est appliquée sur la zone du contour de référence (35), une ou plusieurs lignes par laser ou LED étant appliquées, en tant que projection, sur le substrat (30) à des fins de correction de position tridimensionnelle dans le sens de l'avancée.

2. Procédé selon la revendication 1, **caractérisé en ce que** le contour de référence (35) est déterminé par au moins deux caméras (12, 13, 14) dans le but de conduire une correction de position tridimensionnelle relativement au dispositif d'application (11) suivant un procédé stéréométrique.

3. Procédé selon la revendication 2, **caractérisé en ce que** les deux caméras (12, 13, 14) prennent des vues du substrat (30), d'une section de composant ou d'un ou plusieurs composants sous la forme d'images plein cadre ou d'images grand format, les images plein cadre ou images grand format des deux caméras (12, 13, 14) présentant une zone de chevauchement dans le sens de l'avancée, la reconnaissance de position tridimensionnelle du contour de référence (35) obtenue dans la zone de chevauchement étant utilisée pour ajuster le dispositif d'application (11) préalablement à l'application de la structure (20).

4. Procédé selon la revendication 1, **caractérisé en ce que** le contour de référence (35) n'est déterminé que par une première caméra (12, 13, 14) dans le sens de l'avancée en fonction dudit contour de référence (35) en vue du réglage de l'évolution de la structure à appliquer (20), la première caméra (12, 13, 14) filmant uniquement une bande de l'image en vue du réglage en ligne (« online ») de l'application de la structure adhésive.

5. Procédé selon la revendication 4, **caractérisé en ce que** la deuxième caméra (12, 13, 14) utilise uniquement une bande de l'image en vue du contrôle en ligne de la structure appliquée (20).

6. Procédé selon les revendications 4 et 5, **caractérisé en ce que** les bandes des images des deux caméras (12, 13, 14) sont capturées en formant une seule séquence d'images et la fréquence de capture d'images est accrue conformément à la réduction des données du fait de la capture d'une seule bande de l'image.

7. Procédé selon l'une au moins des revendications 4 à 6, **caractérisé en ce que** chaque caméra (12, 13, 14) n'utilise qu'une portion, notamment environ un tiers, un quart ou un cinquième, des lignes de balayage en tant que bandes de l'image et la fréquence de capture d'images s'en trouve multipliée d'autant, notamment essentiellement triplée, quadruplée ou quintuplée.

8. Procédé selon l'une au moins des revendications précédentes, **caractérisé en ce qu'**un paramétrage et une capture de la vole d'application ont lieu au cours d'une seule capture d'images, les images de toutes les caméras (12, 13, 14) étant enregistrées dans une séquence d'images.

9. Procédé selon la revendication 8, **caractérisé en ce que** la séquence d'images enregistrée utilise, pour le paramétrage, le trajet du robot et/ou la durée de trajectoire du robot ou les coordonnées du robot, la position, le contraste, la valeur de gris ou la valeur de couleur, la largeur et la qualité de la structure (20) appliquée.

10. Procédé selon la revendication 8 ou 9, **caractérisé en ce que** la structure à appliquer (20) est essentiellement déposée dans une chaîne vectorielle à la faveur du paramétrage, moyennant quoi on obtient une grande fréquence de capture d'images et de petites sections partielle comprises essentiellement entre 0,5 et 4 mm, notamment entre 1 et 3 mm.

11. Procédé selon l'une des revendications précédentes, **caractérisé en ce qu'**il met en oeuvre trois caméras (12, 13, 14), chaque caméra pouvant être utilisée aussi bien pour le réglage dans le sens de l'avancée en fonction du contour de référence (35) que pour le contrôle de la structure appliquée (20) dans le sens du suivi, les trois caméras (12, 13, 14) présentant chacune une zone de chevauchement par rapport à la caméra adjacente (12, 13, 14) sur une trajectoire circulaire.

12. Procédé selon la revendication 11 **caractérisé en ce que** les valeurs angulaires de la trajectoire circulaire forment, de 0 à 360, un système de coordonnées global, un segment de la trajectoire circulaire étant associé aux images des différentes caméras (12, 13, 14).

13. Procédé selon la revendication 11 ou 12, **caractérisé en ce qu'**il se produit une commutation automatique d'une caméra (12, 13, 14) à la caméra suivante (12, 13, 14) au cours de l'évolution du contour de référence (35) ou de la trace de colle, lorsque l'évolution de la structure d'application ou du contour de référence (35) passe du segment de trajectoire circulaire d'une caméra (12, 13, 14), via la zone de chevauchement, au segment de trajectoire circulaire d'une autre caméra (12, 13, 14).

14. Dispositif d'application et de contrôle automatiques d'une structure (20) à appliquer sur un substrat (30), de préférence d'une chenille de colle ou d'une trace de colle, conçu pour mettre en oeuvre un procédé selon les revendications 1 à 13, dans lequel sont intégrés au moins un module d'éclairage et une unité de capteurs composée d'au moins deux caméras (12, 13, 14), les caméras (12, 13, 14) étant prévues autour d'un dispositif d'application (11) de structure à appliquer (20) et étant agencées par rapport à celui-ci de manière qu'au moins une caméra (12, 13, 14) soit prévue dans le sens de l'avancée en vue de régler le dispositif d'application (11) au moyen d'un contour de référence (35) et qu'au moins une caméra (12, 13, 14) soit prévue dans le sens du suivi en vue d'un contrôle en ligne simultané de la structure (20) appliquée sur le substrat (30), **caractérisé en ce qu'**il est prévu un appareil de projection servant à l'évaluation tridimensionnelle du contour de référence (35), une ou plusieurs lignes projetées par laser ou LED étant appliquées sur le substrat (30) en tant que projection destinée à la réalisation de corrections de position tridimensionnelle dans le sens de l'avancée.

15. Dispositif selon la revendication 14, **caractérisé en ce que** les axes optiques des différentes caméras (12, 13, 14) coupent essentiellement, dans la direction d'observation, l'axe longitudinal axial du dispositif d'application (11) ou en ce que les axes optiques des différentes caméras (12, 13, 14) sont orientés parallèlement entre eux, en étant notamment orientés perpendiculairement par rapport au substrat (30).

16. Dispositif selon la revendication 14 ou 15, **caractérisé en ce que** les différentes caméras (12, 13, 14), notamment trois caméras (12, 13, 14), sont agencées en étant équidistantes les unes par rapport aux autres dans le sens circonférentiel.

17. Dispositif selon l'une des revendications 14 à 16, **caractérisé en ce que** les différentes caméras (12, 13, 14) coopèrent de telle manière que les images de toutes les caméras (12, 13, 14) sont enregistrées dans une séquence d'images.

18. Dispositif selon la revendication 17, **caractérisé en ce que** chaque caméra (12, 13, 14) capture uniquement une bande de l'image en formant ainsi une partie de la séquence d'images.

19. Dispositif selon la revendication 18, **caractérisé en ce que** la fréquence de capture d'images est accrue conformément à la réduction des données du fait de la capture d'une seule bande de l'image.

20. Dispositif selon l'une des revendications 14 à 19, **caractérisé en ce qu'**il est prévu un appareil de projection au niveau du dispositif d'application (11), celui-ci projetant un ou plusieurs repères, notamment des bandes, sur le substrat (30) aux fins d'une évaluation tridimensionnelle.

21. Procédé selon la revendication 20, **caractérisé en ce qu'**au moins deux appareils de projection sont agencés autour du dispositif d'application (11).

22. Dispositif selon l'une des revendications 14 à 21, **caractérisé en ce que** les caméras (12, 13, 14) sont agencées autour du dispositif d'application (11) de telle manière qu'il se forme au moins un palpage des arêtes essentiellement circulaire, notamment sous la forme d'un calibre circulaire dont le centre est formé par le dispositif d'application (11), les caméras (12, 13, 14) étant notamment situées sur un cercle entourant le dispositif d'application (11) dont le centre correspond essentiellement au centre du dispositif d'application (11).

23. Dispositif selon l'une des revendications 14 à 22, **caractérisé en ce que** les différentes caméras (12, 13, 14) présentent respectivement une zone de chevauchement de 30° à 90°, notamment essentiellement de 60°, par rapport à la caméra (12, 13, 14) suivante.

24. Dispositif selon l'une des revendications 14 à 23 précédentes, **caractérisé en ce que** le module d'éclairage se compose de LED, notamment de LED infrarouges, de LED ultraviolettes ou de LED RVB.

25. Dispositif selon la revendication 24, **caractérisé en ce que** les LED sont amenées à clignoter en employant essentiellement des impulsions de courant de 1,0 à 0,01 ms.

26. Dispositif selon l'une des revendications 14 à 25, **caractérisé en ce qu'**un dispositif de calibrage présentant divers éléments de forme est utilisé pour calibrer les différentes caméras (12, 13, 14) destinées à l'association de l'appartenance angulaire, les éléments de forme présentant notamment un écart angulaire d'essentiellement 10°.

27. Dispositif selon la revendication 26, **caractérisé en ce que** le dispositif de calibrage présente au moins trois emplacements de marquage agencés dans un arc de cercle du dispositif de calibrage d'essentiellement 0°, 120° et 240° en vue du calibrage de trois caméras (12, 13, 14).

28. Dispositif selon la revendication 27, **caractérisé en ce que** les emplacements de marquage s'étendent sur la trajectoire circulaire dans une plage angulaire respective d'essentiellement 10°, les emplacements de marquage étant notamment formés par au moins deux éléments de forme.
